(19) Europäisches Patentamt
European Patent Office
Office européen des brevets

(11) EP 2 404 747 B1

(12) **EUROPEAN PATENT SPECIFICATION**

(45) Date of publication and mention of the grant of the patent:
**04.06.2014 Bulletin 2014/23**

(21) Application number: **10748703.5**

(22) Date of filing: **01.03.2010**

(51) Int Cl.:
***B32B 1/08*** (2006.01) ***B32B 27/30*** (2006.01)
***F04C 5/00*** (2006.01) ***F16K 7/02*** (2006.01)
***F16L 11/04*** (2006.01)

(86) International application number:
**PCT/JP2010/053222**

(87) International publication number:
**WO 2010/101108 (10.09.2010 Gazette 2010/36)**

(54) **FLUORINE-CONTAINING ELASTIC TUBE**
FLUORHALTIGES ELASTISCHES ROHR
TUBE ÉLASTIQUE CONTENANT DU FLUOR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.03.2009 JP 2009054016**

(43) Date of publication of application:
**11.01.2012 Bulletin 2012/02**

(73) Proprietor: **W.L. Gore & Associates, Co., Ltd.**
**Tokyo 108-0075 (JP)**

(72) Inventors:
- **NOMI, Haruo**
**Tokyo 156-8505 (JP)**
- **KIKUKAWA, Hiroyasu**
**Tokyo 156-8505 (JP)**

(74) Representative: **Shanks, Andrew et al**
**Marks & Clerk LLP**
**Aurora**
**120 Bothwell Street**
**Glasgow G2 7JS (GB)**

(56) References cited:
**JP-A- 7 001 630** **JP-A- 9 123 302**
**JP-A- 59 025 725** **JP-A- 2001 193 659**
**JP-A- 2008 030 471** **JP-U- 62 200 301**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to an elastic tube, and it relates to an elastic tube useful for controlling the circulation of fluid in the tube by means of the pressure in a tube diameter direction, such as an elastic tube preferably used in a pinch valve or a roller pump.

### Background Art

When a pinch valve is used, the circulation of fluid (e.g., liquid) is stopped by having pressure applied to an elastic tube in a diameter direction thereof, and the circulation of the fluid is started by having the pressure removed. Furthermore, when a roller pump is used, pressure is applied to an elastic tube in a diameter direction thereof by using a roller, and the roller is moved in an axial direction of the tube while maintaining this pressed state to send out fluid (e.g., liquid). When compared to ordinary valves and pumps, the pinch valve and the roller pump can have a simple flow path structure, and the possibility of contamination in the fluid is small. Therefore, they are often used in fields involving food, medical equipment, and others, and in recent years, they are used for sending photoresist liquids in the production of semiconductors.

In general, silicone rubbers are used for elastic tubes because the silicone rubbers are superior in sustaining elasticity. However, the silicone rubbers are inferior in chemical resistance when compared to fluororesins and others. Therefore, when a highly corrosive fluid (e.g., photoresist liquids, liquids for operating processing mechanical devices, and highly corrosive liquids used in fields such as pharmaceutical, food, medical services, and chemistry) is circulated through an elastic tube disclosed in Patent Document 1, the durability of the tube is greatly deteriorated.

To improve the durability of a tube, there have been proposed a technique of protecting the inner surface of a silicone elastomer tube with a fluororesin layer (e.g., Patent Document 1), and a technique of forming a tube with a fluoroelastomer (e.g., Patent Document 2). However, even if the inner surface of a silicone elastomer tube is protected with a fluororesin layer, the adhesion is not sufficient between the elastomer layer and the fluororesin layer on the inner surface thereof. In particular, when compressing and releasing are repeated in a diameter direction of the tube and stress is loaded therein, the stress is concentrated in a joining interface of the inner surface layer and the elastomer layer, resulting in an occurrence of an interlayer peeling particularly at a bent portion referred to as "cheek portion", and thereby sufficient durability cannot be obtained.

On the other hand, when compared to silicone elastomers and others, a fluoroelastomer tube has a high tackiness. The "tackiness" refers to a property of easily sticking to a material identical to oneself or a different material, and when tackiness is high, for example, if an elastic tube is pressed by a roller of a roller pump and left at this state, inner surfaces thereof may stick to each other without being restored, resulting in a blockage of the tube. In addition, when the tube is repeatedly used, due to high tackiness, the inner surface of the tube can easily be damaged and the durability thereof becomes deteriorated.

To improve the durability of a fluoroelastomer tube, Patent Documents 3 and 4 propose covering the inner surface of the tube with a fluororesin layer having specific hardness. The thickness of the fluororesin layer is specified to be from 5 to 300 μm in Patent Document 3, and is specified to be from 0.5% to 70% (200 μm in Examples) of the thickness of a base material of the tube in Patent Document 4. In addition, as the fluororesin, non-amorphous fluororesins having high crystallinity are used, such as polytetrafluoroethylene (PTFE), tetrafluoroethylene-hexafluoropropylene copolymer, polyvinylidene fluoride (PVDF), tetrafluoroethylene-perfluoroalkyl vinyl ether copolymer, tetrafluoroethylene-ethylene copolymer (ETFE), and vinylidene fluoride-hexafluoropropylene-tetrafluoroethylene ternary copolymer. However, even with these examples, peeling between the fluoroelastomer and the fluororesin layer on the inner surface thereof occurs after repeated usage, and thereby sufficient durability cannot be obtained.

To solve both the peeling problem when the inner surface of a silicone elastomer tube is covered with a fluororesin layer, and the peeling problem when the inner surface of a fluoroelastomer tube is covered with a fluororesin layer; the present inventors have proposed to use a porous fluororesin, of which pores are filled with an elastomer, as an middle layer between the elastic tube and the fluororesin layer on the inner surface thereof (Patent Document 5). Although the durability of the tube was greatly improved with this technique, further improvement has been desired in durability.

### Prior Art Documents

### Patent Documents

Patent Document 1: Japanese Utility Model Publication No. 4-47185
Patent Document 2: Japanese Utility Model Publication No. 59-41687
Patent Document 3: Japanese Patent Laid-open Publication No. 2001-193659
Patent Document 4: Japanese Patent Laid-open Publication No. 2004-1467
Patent Document 5: Japanese Patent Laid-open Publication No. 2008-30471

Summary of the Invention

Problems to be Solved by the Invention

It is an object of the present invention to provide an elastic tube having further improved durability while ensuring solvent resistance.

Means of Solving the Problems

To solve the problems described above, the present inventors have intensively studied, and as a result, they have found that the durability of an elastic tube against repeated pressing can significantly be improved by selecting a fluoroelastomer as the elastomer, covering the inner surface of a hollow body made of this fluoroelastomer with an amorphous perfluororesin, and adjusting the thickness of the amorphous perfluororesin to not greater than 1 μm by utilizing its solvent solubility, thereby completing the present invention.

That is, the fluorinated elastic tube of the present invention is characterized in that it comprises an elastic hollow body made of a fluorinated polymer and an amorphous perfluororesin membrane having a thickness of not greater than 1 μm and being in direct close contact with the under surface of the hollow body. The amorphous perfluororesin membrane may have a critical surface tension of, for example, not higher than 20 mN/m. The amorphous perfluororesin may have a repeating unit of, for example, formula (1), (2a), or (2b):

[Chemical Formula 1]

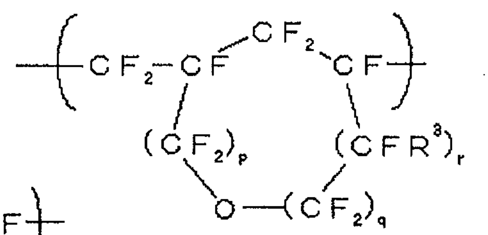

(2 a)

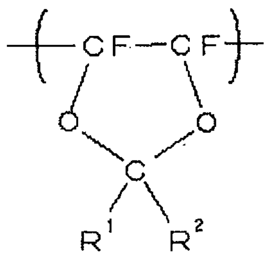

(1)

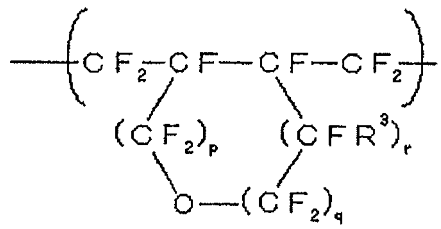

(2 b)

wherein $R^1$, $R^2$, and $R^3$ are each independently a fluorine atom or a perfluoroalkyl group; p + q + r is an integer of from 1 to 6; p is an integer of from 0 to 5; q is an integer of from 0 to 4; and r is 0 or 1.

The above elastic hollow body made of a fluorinated polymer may be formed of, for example, a porous fluororesin (in particular, an expanded porous polytetrafluoroethylene) and a fluoroelastomer filling pores of the porous fluororesin. The above porous fluororesin may usually have a pore ratio of from 40% to 98% and a maximum pore diameter of from 0.01 to 20 μm. The preferred elastic hollow body is a roll-shaped product having a first layer made of a fluoroelastomer and a second layer made of a porous fluororesin, of which pores are filled with a fluoroelastomer. The thickness ratio of the first layer to the second layer (the first layer / the second layer) may be, for example, not greater than 6.5/1. The above elastic hollow body may have an inner diameter of, for example, from about 1 to 40 mm and a thickness of, for example, from about 0.5 to 25 mm. The above elastic hollow body may have a reinforcing layer and/or a low friction layer formed on the outer surface thereof. The reinforcing layer and/or low friction layer may be, for example, a tube-shaped product made of a fluororesin, a fluororesin coating layer, or a carbon-based coating layer.

The present invention further includes a pinch valve or a roller pump, using the above fluorinated elastic tube.

Effects of the Invention

In the present invention, since an amorphous perfluororesin membrane is used as a fluororesin membrane to be formed on the inner surface of an elastic hollow body, the fluororesin membrane on the inner surface can be formed to be extremely thin. When the fluororesin membrane (amorphous perfluororesin membrane) on the inner surface is formed to be extremely thin, rather than using an middle layer for adhesion (an adhesion layer), if the middle layer (an adhesion layer) is omitted, the fluororesin membrane (amorphous perfluororesin membrane) on the inner surface can be prevented from being peeled, making it possible to improve durability. Furthermore, in the present invention, since a fluoroelastomer is selected as the elastomer, solvent resistance can be ensured even though the inner surface is covered with an extremely thin fluororesin membrane (amorphous perfluororesin membrane) and a solvent can easily penetrate the coating film.

Brief Explanation of the Drawings

[FIG. 1] FIG. 1 is a schematic view showing one example of the fluorinated elastic tube of the present invention.
[FIG. 2] FIG. 2 is a schematic view showing one example of the elastic hollow body of the present invention.

Mode for Carrying Out the Invention

The fluorinated elastic tube of the present invention comprises, for example, as shown in the cross-sectional view of FIG. 1, an elastic hollow body 10 made of a fluorinated polymer; and a fluororesin membrane 20 being in direct close contact with the inner surface of the hollow body 10. The fluororesin membrane 20 is an amorphous perfluororesin membrane having a thickness of not greater than 1 $\mu$m. The formation of the amorphous perfluororesin membrane 20 on the inner surface makes it possible to prevent tacking that occurs when the elastic hollow body 10 is pressed. In addition, since the elastic hollow body 10 is made of a fluorinated polymer and the elastic hollow body itself has solvent resistance, the solvent resistance of the tube 1 can be ensured, even when the amorphous perfluororesin film 20 on the inner surface is formed to be as thin as not greater than 1 $\mu$m and when a liquid circulating the tube 1 penetrates the amorphous perfluororesin film 20. Furthermore, when the amorphous perfluororesin film 20 on the inner surface is formed to be extremely thin, the amorphous perfluororesin film 20 becomes very difficult to be peeled, even when the tube 1 is repeatedly pressed, and the durability of the tube against repeated pressing can significantly be improved. This durability is beyond the durability obtained when the fluororesin film 20 is attached to the elastic hollow body 10 with an adhesive layer (an middle layer).

In general, fluororesins easily crystallize, and the crystallized portions thereof will not be dissolved in a solvent. Therefore, ordinary fluororesins are applied by, for example, melt coating; however, melt coating results in thick membranes. In contrast, the amorphous perfluororesin to be used as the fluororesin membrane 20 in the present invention can be dissolved in a solvent (in particular, a fluorinated solvent). Therefore, the thickness of the fluororesin film 20 after film formation can be made to be extremely thin by controlling a concentration thereof. In addition, the amorphous perfluororesin has lower critical surface tension, and therefore, the prevention of tacking is further improved.

The amorphous perfluororesin can be distinguished from ordinary fluororesins in that a ring structure (e.g., a five- or six-membered ring structure, and particularly, a five-membered ring structure) has been introduced in the main chain thereof. The perfluororesin having a ring structure introduced in the main chain thereof may include fluororesins having a repeating unit of formula (1), (2a), or (2b):

[Chemical Formula 2]

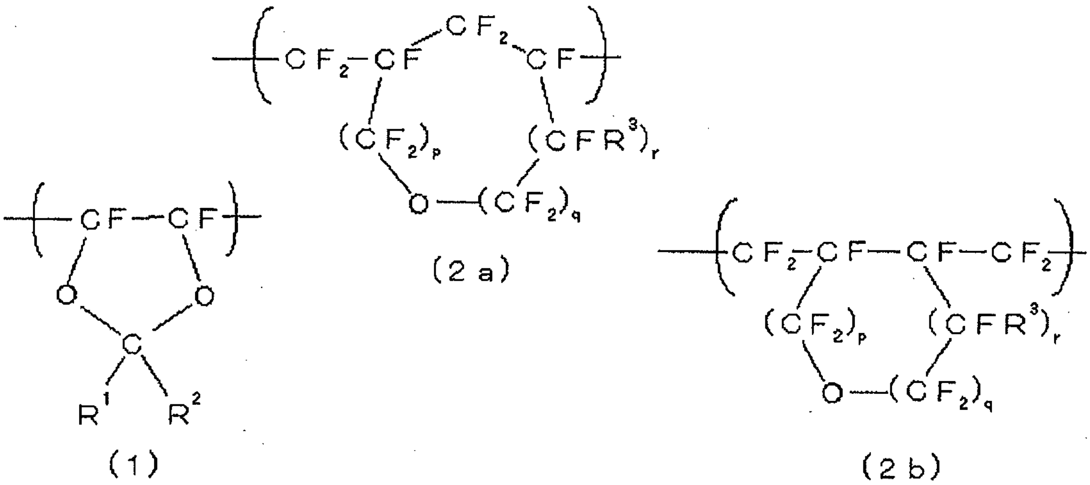

(1) (2a) (2b)

wherein $R^1$, $R^2$, and $R^3$ are each independently a fluorine atom or a perfluoroalkyl group; p + q + r is an integer of from 1 to 6; p is an integer of from 0 to 5; q is an integer of from 0 to 4; and r is 0 or 1.

A resin having a repeating unit (1) can be produced according to, for example, the method disclosed in Japanese Patent Laid-Open Publication No. 3-252474. In a preferred repeating unit (1), $R^1$ and $R^2$ are both a trifluoromethyl group. A polymer having this preferred repeating unit (1) is represented by, for example, formula (3) depicted below. The polymer of formula (3) is commercially available from DuPont as the product name "Teflon (registered trademark) AF."

[Chemical Formula 3]

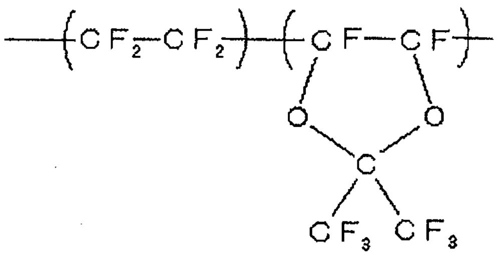

(3)

A polymer having a repeating unit (2a) or (2b) can be produced according to, for example, the methods disclosed in Japanese Patent Laid-Open Publication Nos. 2-129254 and 3-252475. A preferred repeating unit is represented by formula (4) depicted below. A polymer having a repeating unit (4) is commercially available from Asahi Glass Co., Ltd. as the product name "Cytop."

[Chemical Formula 4]

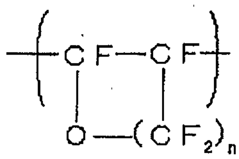

(4)

wherein n is 1 or 2 (preferably, 2).

The amorphous perfluororesin film 20 may have a critical surface tension of, for example, not higher than 20 mN/m, preferably not higher than 18 mN/m, and more preferably not higher than 16 mN/m. If the amorphous perfluororesin film 20 has smaller critical surface tension, it becomes more difficult to cause tacking on the inner surface when the tube 1 is pressed. The lower limit of critical surface tension is not particularly limited, but it may be, for example, not lower than 6 mN/m, particularly not lower than 9 mN/m.

The amorphous perfluororesin film 20 has a thickness of not greater than 1 μm, and it may preferably have a thickness of not greater than 0.8 μm, more preferably not greater than 0.6 μm. The tower limit of thickness is not particularly limited, so long as the tacking of the elastic hollow body made of a fluororesin can be prevented, but it may be, for example, not smaller than 0.01 μm, particularly not smaller than 0.1 μm.

In this connection, the thickness of the amorphous perfluororesin film can be determined on the basis of a cross-sectional image obtained by an electron microscope.

On the other hand, so long as the elastic hollow body 10 is made of a fluorinated polymer, the elastic hollow body 10 may be a hollow body made of a fluoroelastomer alone, or may be a hollow body made of a fluoroelastomer and a porous fluororesin layer. The use of a porous fluororesin makes it possible to ensure the chemical resistance of the elastic hollow body 10 and reinforce the fluoroelastomer without deteriorating the elasticity thereof.

The fluoroelastomer may include: cross-linked products of a polymer having fluoromethylene in the main chain thereof; and fluorinated thermoplastic elastomers. The cross-linked precuts may include FKMs (binary FKMs, ternary FKMs, and perfluorovinyl ether-containing FKMs), FFKMs, TFE-Pr type fluoro-rubbers, TFE Pr-VdF type fluoro-rubbers, fluorinated thermoplastic elastomers, and rubbers in which fluorinated polyether backbones are cross-linked with Si (e.g., liquid fluoro-rubbers) (see the formulae depicted below). In this connection, the liquid fluoro-rubbers are available from Shin-Etsu Chemical Co., Ltd. as "SIFEL" (product name).

[Chemical formula 5]

Binary FKM

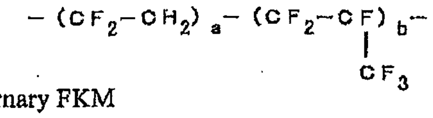

Ternary FKM

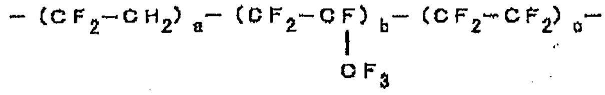

Perfluorovinyl ether-containing FKM

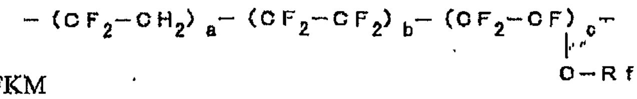

FFKM
(Perfluoro-rubber)

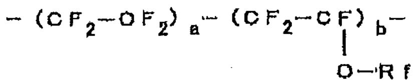

FEPM
TFE-Pr type fluoro-rubber

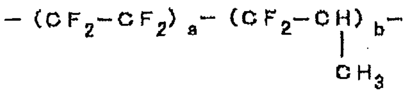

TFE-Pr-VdF type fluoro-rubber

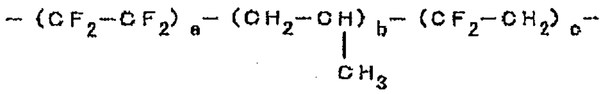

Fluorinated thermoplastic elastomer

$-(HS)_a-(FKM)-(HS)_b-$

HS: Hard segment (e.g., ETFE)

Liquid fluoro-rubber

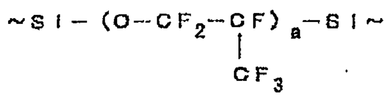

Furthermore, the fluoroelastomer may be any of fluorosilicone rubbers such as cross-linked products of polysiloxane having fluoroalkyl groups bonded thereto (e.g., FMVQ; see the formula depicted below).

[Chemical Formula 6]

FMVQ

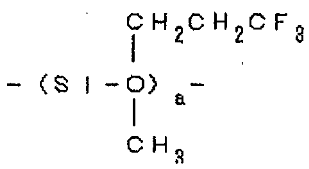

The fluoroelastomer does not necessarily have to be cured at the material stage, so long as the fluoroelastomer is finally cured (which is not limited to crosslinking, but broadly means to form a three-dimensional network structure; the same is true in the following unless indicated otherwise) by crosslinking of a crosslinkable elastomer or by interaction between the hard segments of a thermosetting elastomer. The fluoroelastomer raw material may be in either solid form (kneaded form) or liquid form.

The fluoroelastomer may form the elastic hollow body 10 by itself, but the fluoroelastomer may preferably be reinforced with a porous fluororesin (in particular, an expanded porous polytetrafluoroethylene). When using the porous

fluororesin layer, for example, the pores of a hollow body made of a porous fluororesin may be filled with a fluoroelastomer, but the first layer 12 made of a fluoroelastomer and a porous fluororesin layer 13 (the second layer) having pores filled with a fluoroelastomer may preferably be layered to form a roll-shaped structure (hereinafter referred to as the roll-shaped elastic hollow body 10). FIG. 2 is a schematic cross-sectional view showing one example of the roll-shaped elastic hollow body 10. As disclosed in Japanese Patent Laid-Open Publication No. 2002-502735, the roll-shaped elastic hollow body 10 can be produced by winding a porous film, of which inside and surface are impregnated (coated) with a fluoroelastomer; and the mechanical strength of the elastic hollow body 10 can dramatically be improved. Furthermore, the roll-shaped elastic hollow body 10 exhibits remarkable excellent shape restorability when compression stress is released.

The thickness ratio (the first layer / the second layer) of the first layer 12 made of a fluoroelastomer and the second layer 13 made of a porous fluororesin layer having pores filled with a fluoroelastomer may be, for example, not higher than 6.5/1, preferably from 1/1 to 5/1.

The porous fluororesin may have a porosity of, for example, about from 40% to 98%, preferably about from 50% to 95%, and more preferably about from 60% to 90%. When the porosity is too small, the amount of the filling fluoroelastomer becomes small, so that pressing-force buffering function is deteriorated. In contrast, when the porosity is too great, the porous fluororesin has decreased mechanical strength.

The porosity is a value calculated, on the basis of the formula described below, from the apparent density $\rho_1$ (in units of g/cm$^3$ as measured according to JIS K 6885) of a porous fluororesin, and the density (true density) $\rho_2$ (2.2 g/cm$^3$ in the case with PTFE) of an original fluororesin before being made porous.

$$\text{Porosity (\%)} = (\rho_2 - \rho_1) / \rho_2 \times 100$$

The maximum pore diameter of a porous fluororesin may appropriately be set from the viewpoint of the characteristics (ease to fill) of a fluoroelastomer to be used for filling, and may be, for example, not smaller than 0.01 $\mu$m, preferably not smaller than 0.1 $\mu$m, and not greater than 20 $\mu$m, preferably not greater than 10 $\mu$m. When the maximum pore diameter is too small, it is difficult to fill such a fluoroelastomer. In contrast, when the maximum pore diameter is too great, the mechanical strength may become insufficient. The maximum pore diameter can be measured according to the prescription (ethanol is used as a chemical agent) of ASTM F316-86.

The elastic hollow body 10 may have a thickness of, for example, about from 10% to 200%, preferably about from 20% to 150%, and more preferably about from 25% to 125%, relative to the inner diameter of the elastic hollow body 10. Furthermore, the elastic hollow body 10 may have a thickness of, for example, about from 0.5 to 25 mm, preferably about from 0.7 to 10 mm, and more preferably about from 1.0 to 5 mm. If the elastic hollow body 10 is too thin, when the tube 1 is used in a pinch valve or a roller pump, there is fear that the tube 1 cannot withstand the inner pressure of fluid in the tube 1 to cause rupture. Furthermore, the shape recoverability exhibited when compression stress (pressing force) is released becomes insufficient. In contrast, if the elastic hollow body 10 is too thick, it becomes difficult to block the tube 1 by pressing.

The elastic hollow body 10 may have an inner diameter of, for example, about from 1 to 40 mm, preferably about from 1 to 20 mm, and more preferably about from 2 to 10 mm. The elastic hollow body 10 may have an outer diameter of, for example, about from 3 to 60 mm, preferably about from 4 to 40 mm, and more preferably about from 5 to 20 mm.

If necessary, a reinforcing layer and/or a low friction layer may further be formed on the outer surface of the elastic hollow body 10. The formation of a reinforcing layer makes it possible both to prevent abrasion occurring when the outer surface of the fluorinated elastic tube 1 is subjected to pressing force, and to prevent the rupture of the fluorinated elastic tube 1 when the tube 1 is subjected to strong inner pressure. The formation of a low friction layer makes it possible both to disperse stress occurring when the fluorinated elastic tube 1 is subjected to pressing force associated with shearing, and to prevent rupture and abrasion on the outer surface of the fluorinated elastic tube 1.

For the reinforcing layer, various materials can be used, including polymer materials such as vinyl chloride, polystyrene, polyesters (e.g., polyethylene terephthalate), polyolefins (e.g., polyethylene, polypropylene), polyamides, polyimides, and fluororesins; and inorganic materials such as glass fibers.

Furthennore, the reinforcing layer may have any of the shapes such as applied products; extruded tubes; extruded-stretched tubes; wound products of stretched films; wound products of solid films; wound products of porous films; products formed in a tube shape from threads; and wound products of woven fabrics, knitted fabrics, braided materials, laces, nets, or other materials.

The reinforcing layer may preferably be, although need not be, fixed on the elastic hollow body 10 from the viewpoints of further improvements in abrasion resistances and in rupture resistance. When the reinforcing layer is fixed on the elastic hollow body 10, the fixing method is not particularly limited, and, for example, it maybe fixed with an

adhesive; however, the reinforcing layer may preferably be fixed by making use of a liquid fluoroelastomer material, as an adhesive, which material is the same as the material of the elastic hollow body 10. In addition, the reinforcing layer may also preferably be formed and fixed by making use of the contractive force of the reinforcing layer. The use of the contractive force makes it possible not to deteriorate the elasticity of the tube 1.

The reinforcing layer may preferably be any of the tubular products of fluororesins, particularly, tubular products ofpolytetrafluoroethylene (PTFE). The tubular products of fluororesins (particularly, tubular products of PTFE) have excellent abrasion resistance, chemical resistance, heat resistance, and other resistances.

When the reinforcing layer is formed from a fluororesin (particularly, PTFE), as the reinforcing layer, there may desirably be used any of wound products of porous fluororesin films; products formed in a tube shape from fluororesin threads; and wound products of woven fabrics, knitted fabrics, braided materials, laces, nets, or other materials, all of which are made of fluororesin threads. The use of these products makes it possible to firmly attach the reinforcing layer to the elastic hollow body 10 because an adhesive penetrates into the pores or between the fibers.

As the low friction layer, there can be used coating layers formed from low friction materials, for example, fluororesin-based coating layers such as PTFE and PFA, and carbon-based coating layers such as diamond, diamond-like carbon, and graphite. The preferred low friction reinforcing layer is a coating layer made of diamond-like carbon. The diamond-lilce carbon layer not only has low friction coefficient but also is less aggressive to a partner material, so that scratches and shavings are unlikely to occur on the partner material. The method of coating a low friction material is not particularly limited, but may include a method of applying and then solidifying a liquid product (e.g., a solution, a melt) containing the low friction material, and a method of vapor-depositing a low friction material (e.g., a method of transforming the low friction material into an ion or plasma, and then vapor-depositing it to a base material). In this connection, the physical vapor deposition (PVD) layer made of diamond-like carbon has been put into practical use by, for example, Nippon ITF Inc., as trademark "GENIUSCOAT F."

The fluorinated elastic tube 1 of the present invention can be produced by appropriately employing any of the heretofore known methods. For example, when the elastic hollow body 10 is formed of a fluoroelastomer and a porous fluororesin layer, the porous fluororesin layer may be filled with the fluoroelastomer and then this filled product may be coated with the amorphous perfluororesin film 20, or alternatively, the porous fluororesin layer may be coated with the amorphous perfluororesin film 20 and then the porous fluororesin layer may be filled with the fluoroelastomer. Furthermore, the elastic body (or porous fluororesin layer) may be formed in a hollow shape and then may be coated with the amorphous perfluororesin film 20, or alternatively a planar elastic body (or porous fluororesin layer) may be coated with the amorphous perfluororesin film 20 and then this coated porudtc may be wound.

In this connection, the elastic hollow body 10, the planar elastic body, or the porous fluororesin layer may be subjected to etching or primer treatment for the purpose of improving their attachment to the amorphous perfluororesin membrane 20; however, such etching or primer treatment is not essential.

When the pores of a porous fluororesin layer is filled with a liquid fluoroelastomer, the viscosity (25°C) of the liquid fluoroelastomer may be, for example, not higher than 1,000 Pa.s (10,000 poise), preferably not higher than 100 Pa.s, and more preferably not higher than 20 Pa.s.

When an elastic body (e.g., the elastic hollow body 10, a planar elastic body) containing a fluoroelastomer is coated with the amorphous perfluororesin film 20, for example, in the case when the porous fluororesin layer is filled with the fluoroelastomer and then coated with the amorphous perfluororesin film 20, the amorphous perfluororesin film 20 may desirably be formed by the application of a liquid containing the amorphous perfluororesin dissolved therein. When a dispersion of a fluororesin has been applied, it is necessary to heat the applied liquid to a melting temperature range (about 300°C) of the fluororesin for membrane formation. In contrast, when a liquid containing the amorphous perfluororesin dissolved therein has been applied, the applied liquid can be formed into a film by only volatilization to remove the solvent, so that there is no possibility that the fluoroelastomer is deteriorated.

As solvents for dissolving an amorphous perfluororesin, there are known, for example, fluorinated solvents. Such fluorinated solvents are commercially available as, for example, product name "Fluorinert," product name "Novec," from Sumitomo 3M Limited.

The fluorinated elastic tube 1 of the present invention can be used as a member for controlling the circulation of fluid by pressing, and can be used as, for example, an elastic tube in a pinch valve or a roller pump. The pinch valve is a device for controlling the circulation of fluid in a tube, by allowing the pinch valve, which operates by fluid pressure (e.g., air pressure , oil pressure), electricity, and other means, to press an elastic tube in the diameter direction from the side thereof, thereby flattening (particularly, blocking) the cross-section of the tube. Furthermore, the roller pump is a device for sending out fluid in the tube by allowing a pressing member such as a roller to press an elastic tube in the diameter direction, and by allowing the pressing member to move (particularly, to repeatedly move from the upstream side to the downstream side) in the axial direction of the elastic tube while maintaining this pressed state.

The type of fluid circulating in the tube 1 is not particularly limited, but it may be either gas or liquid, preferably liquid.

Examples

The present invention will hereinafter be described more specifically by reference to Examples, but the present invention is not limited to these Examples. The present invention can be put into practice after appropriate modifications or variations within a range meeting the gist described above and below, all of which are included in the technical scope of the present invention.

Example 1

A liquid fluoro-rubber ("SIFEL-617" available from Shin-Etsu Chemical Co., Ltd.) was applied to one side of a bidirectionally-expanded porous PTFE film ("ePTFE film" available from W.L. Gore & Associates Co., Ltd.; having a width of 400 mm, a length (depth) of 816 mm, a porosity of 78%, a maximum pore diameter of 0.4 μm, and a thickness of 18 μm) to fill the pores of the porous PTFE film. This applied film was wound on a stainless steel bar material (having an outer diameter of 5 mm) while having the applied surface to be on the inner side and while preventing air from being wound inside. The liquid fluoro-rubber was cross-linked by heating at a temperature of 150°C for 30 minutes.

After cooling, the wound product was twisted by hand to loosen the compression bonding to the stainless steel bar material, and the stainless steel bar material was pulled out to obtain an elastic hollow body 10 (having an inner diameter of 4.8 mm, an outer diameter of 9.6 mm, and a ratio of the thickness of the fluoro-rubber layer to the thickness of the porous PTFE layer filled with the fluoro-rubber of 3/1).

The elastic hollow body 10 was subjected to dip coating with an amorphous perfluororesin (product name "Teflon (registered trademark) AF-1600" available from DuPont), followed by solvent removal, to produce a fluorinated elastic tube 1, on which inner surface an amorphous perfluororesin membrane 20 having a thickness of 0.5 μm was formed.

Example 2

A fluorinated elastic tube 1 was obtained in the same manner as described in Example 1, except that an amorphous perfluororesin membrane 20 having a thickness of 0.5 μm was formed on the inner surface using an amorphous perfluororesin available from Asahi Glass Co., Ltd. (product name "Cytop").

Comparative Example 1

An elastic tube 1 was obtained in the same manner as described in Example 1, except that an amorphous partially-fluorinated resin membrane having a thickness of 10 μm was formed on the inner surface using an amorphous partially-fluorinated resin available from Asahi Glass Co., Ltd. (product name "Lumiflon"), instead of the amorphous perfluororesin film 20.

Comparative Example 2

A fluorinated elastic tube 1 was obtained in the same manner as described in Example 1, except that the rubber to be filled in the pores of the bidirectionally-expanded porous PTFE film was changed to a liquid silicone rubber ("KE106" available from Shin-Etsu Chemical Co., Ltd.).

Comparative Example 3

The bidirectionally-expanded porous PTFE film ("ePTFE film" available from W.L. Gore & Associates Co., Ltd.); having a width of 500 mm, a porosity of 90%, and a thickness of 20 μm) was compressed with a calender roll device having an outer diameter of 300 mm, a width of 600 mm, and an anti-rolling reaction force of 1 MN (maximum) under the conditions of a roll temperature of 70°C, a linear pressure of 8 $N/mm^2$, and a feed rate of 6 m/min, to obtain a white opaque color film having a width of 500 mm, a length of 500 mm, a porosity of 5%, and a thickness of 2.1 μm. This white opaque film was sandwiched between two polyimide films ("UPILEX 20S" (product name) available from Ube Industries Ltd.); heat-pressed for 5 minutes using a hot press device having a press surface size of 750 mm x 750 mm and a maximum welding pressure of 2 MN under the conditions of a press plate temperature of 400°C and a surface pressure of $10N/m^2$, and then, while maintaining the surface pressure, gradually cooled for 60 minutes to a press plate temperature of 25°C, to obtain a transparent PTFE film (dense PTFE film) having a width of 500 mm, a length of 500 mm, a porosity of 0%, and a thickness of 2 μm.

The dense PTFE film was cut in a size of a width of 400 mm and a length (depth) of 158 mm, and was wound ten times around a stainless steel bar material (having an outer diameter of 5 mm) so that the length (depth) direction

thereof was corresponding to a wind-up direction (circumference direction), to form an inner layer having a thickness of about 20 μm.

A bidirectionally-expanded porous PTFE film ("ePTFE film" available from W.L. Gore & Associates Co., Ltd.; having a width of 400 mm, a length (depth) of 81 mm, a porosity of 85%, a maximum pore diameter of 0.5 μm, and a thickness of 20 μm), which was to be used as an middle layer, was wound (the number of windings was 5) on the inner layer so that the length (depth) direction thereof was corresponding to the wind-up direction (circumference direction). This wound product was heated for 30 minutes at a temperature of 375°C using a compulsive hot wind circulation / ventilation type thermo-hygrostat ("STPH-201" available from Espec Co., Ltd.) to respectively introduce heat seals between the films of the inner layer, between the films of the porous fluororesin film, and between the inner layer film and the porous fluororesin film, to obtain a cylindrical intermediate body having an outer diameter of 5.2 mm, which contained the stainless steel bar material having an outer diameter of 5 mm as a core material. Using a rubber spatula, 10 g of a heat-curable liquid fluoro-rubber ("SIFEL-8070A/B" available from Shin-Etsu Chemical Co., Ltd.) was applied to the porous fluororesin film surface of the cylindrical intermediate body to be impregnated in the pores. An excessive liquid fluoro-rubber was scraped off with the rubber spatula and a nonwoven fabric wiper to form a cylindrical intermediate body.

Separately, a heat-curable liquid fluoro-rubber ("SIFEL-617" available from Shin-Etsu Chemical Co., Ltd.) was applied to one side of a bidirectionally-expanded porous PTFE film ("ePTFE film" available from W.L. Gore & Associates Co., Ltd.); having a width of 400 mm, a length (depth) of 816 mm, a porosity of 78% a maximum pore diameter of 0.4 μm, and a thickness of 18 μm). This applied film was wound on the cylindrical intermediate body while having the applied surface to be on the inner side and while preventing air from being wound inside to form an outer layer (the number of windings was 35 times).

The liquid silicone rubber in the middle layer and the outer layer was cross-linked by heating at a temperature of 150°C for 30 minutes. After cooling, the outer layer (elastic layer) was twisted by hand to loosen the compression bonding between the dense PTFE as the inner layer and the core material (stainless steel bar material), and the stainless steel bar material was pulled out to obtain a fluorinated elastic tube (having an inner diameter of 5 mm, an outer diameter of 9.6 mm, a length in the axial direction of 400 mm, a thickness of the inner layer of 20 μm, a thickness of the mid-layer of 100 μm, a thickness of the outer layer of 2.2 mm, a thickness of the fluoro-rubber layer as the outer layer (the first layer) of 1,550 μm; a thickness of the PTFE film layer filled with fluoro-rubber (the second layer) as the outer layer of 630 μm, and a ratio of the thickness of the first layer to the thickness of the second layer of 2.5/1).

The durability, chemical resistance, and obstructiveness of the fluorinated elastic tubes 1 obtained in Examples 1 to 2 and Comparative Examples 1 to 3 were evaluated in such a manner as described below.

1) Durability

Each of the fluorinated elastic tubes 1 was attached to a resin-made pinch valve for wet process (product name "Dymatrix AVPV3" available from Asahi Organic Chemicals Industry Co., Ltd.). This pinch valve has a 15 mm x 10 mm prismatic piston (the tip peripheral portion is chamfered (having a curvature of 0.4)), and the pressing force of this piston can be controlled by pushing back the piston with compressed air while having the piston push, by means of a spring attached thereto, in a direction toward a flat plate. Each tube was inserted between the piston and the flat plate, and, without allowing any liquids to pass through the tube, the elastic tube was repeatedly pressed by the piston. The pressing conditions are as follows:

Pressing time: 1.5 sec for each pressing
Pressure release time: 1.5 sec for each pressure release
Maximum pressing force by spring: 1.3 MPa
Compressed air pressure: 0.4 MPa

The number of repetitions was counted until the fluororesin membrane on the inner surface of each tube was separated.

2) Chemical Resistance

This test was carried out in the same manner as described above in the section "1) Durability", except that propylene glycol monomethyl ether acetate (PGMEA) was allowed to pass through each tube.

3) Obstructiveness

Each of the fluorinated elastic tubes 1 was attached to the above resin-made pinch valve for wet process (product name "Dymatrix AVPV3" available from Asahi Organic Chemicals Industry Co., Ltd.) so that the inlet side piping was connected to the outlet side piping, and each of the tubes 1 was pressed by the piston. The open end of the outlet

side piping was submerged in water at a depth of 20 mm, pressure was applied to the open end of the inlet side piping for 30 seconds with compressed air (0.4 MPa), and the formation of air bubbles from the outlet side piping was visually observed. When air bubbles were not formed even by applying pressure for 30 seconds, it was determined as "excellent", and when air bubbles were formed in applying pressure for 30 seconds, it was determined as "no good".

The results are shown in Table 1

[Table 1]

| | Inner layer (fluororesin membrane 20) | | | Middle layer (adhesive layer) | Outer layer (elastic hollow body 10) | Durability | Chemical resistance | Obstructiveness |
|---|---|---|---|---|---|---|---|---|
| | Material | Critical surface tension (mN/m) | Thickness | | | | | |
| Example 1 | Amorphous perfluororesin membrane (available from DuPont, product name "Teflon AF-1600") | 15 | 0.5 μm | Not formed | Expanded porous PTFE / fluoro-rubber | ≥ 1,000,000 times | ≥ 1,000,000 times | Excellent |
| Example 2 | Amorphous perfluororesin membrane (available from Asahi Grass Co, Ltd., product name "Cytop") | 19 | 0.5 μm | Not formed | Expanded porous PTFE / fluoro-rubber | 500,000 times | 500,000 times | Excellent |
| Comparative Example 1 | Amorphous partially-fluorinated resin membrane (available from Asahi Grass Co, Ltd., product name "Lumiflon") | 33 | 10 μm | Not formed | Expanded porous PTFE / fluoro-rubber | 50,000 times | Not evaluated | Excellent |
| Comparative Example 2 | Amorphous perfluororesin membrane (available from DuPont, product name "Teflon AF-1600") | 15 | 0.5 μm | Not formed | Expanded porous PTFE / silicone rubber | ≥ 1,000,000 times | 50,000 times | Excellent |
| Comparative Example 3 | Dense PTFE wound film | 18 | 20 μm | Formed | Expanded porous PTFE / fluoro-rabber | 250,000 times | 250,000 times | Excellent |

As can be seen from Table 1, durability can be improved in the examples in which the amorphous perfluororesin membrane on the inner surface was formed to be extremely thin (Examples 1 and 2), as compared with the example in which the amorphous partially-fluorinated resin membrane had a thickness of 10 μm (Comparative Example 1) and the example in which the middle layer for adhesion was formed (Comparative Example 3). Furthermore, as can be seen from the comparison with Comparative Example 2, since the fluoro-rubber is used for the elastic hollow bodies 10 in Examples 1 and 2, there is no possibility that chemical resistance is deteriorated even when the amorphous perfluororesin membrane on the inner surface is formed to be thin.

Industrially Applicability

The tube 1 of the present invention has excellent chemical resistance and therefore can be used for circulating fluids such as photoresist liquids, liquids for operating processing mechanical devices, and highly corrosive liquids used in fields including pharmaceutical, food, medical service, and chemistry. Furthermore, the tube 1 of the present invention has low tackiness and therefore can be used even for applications that cannot allow having a circulation component attached to the inner surface of the tube.

Explanation of Numerals

1 Fluorinated elastic tube

10 Elastic hollow body

20 Amorphous perfluororesin membrane (fluororesin membrane)

12 Layer made of fluoroelastomer

13 Layer made of porous fluororesin filled with fluoroelastomer

## Claims

1. A fluorinated elastic tube comprising: an elastic hollow body made of a fluorinated polymer; and an amorphous perfluororesin membrane having a thickness of not greater than 1 μm and being in direct close contact with the inner surface of the hollow body.

2. The fluorinated elastic tube according to claim 1, wherein the amorphous perfluororesin is a perfluororesin having a ring structure in a main chain thereof,

3. The fluorinated elastic tube according to claim 1 or 2, wherein the amorphous perfluororesin has a repeating unit of formula (1), (2a), or (2b):

[Chemical Formula 1]

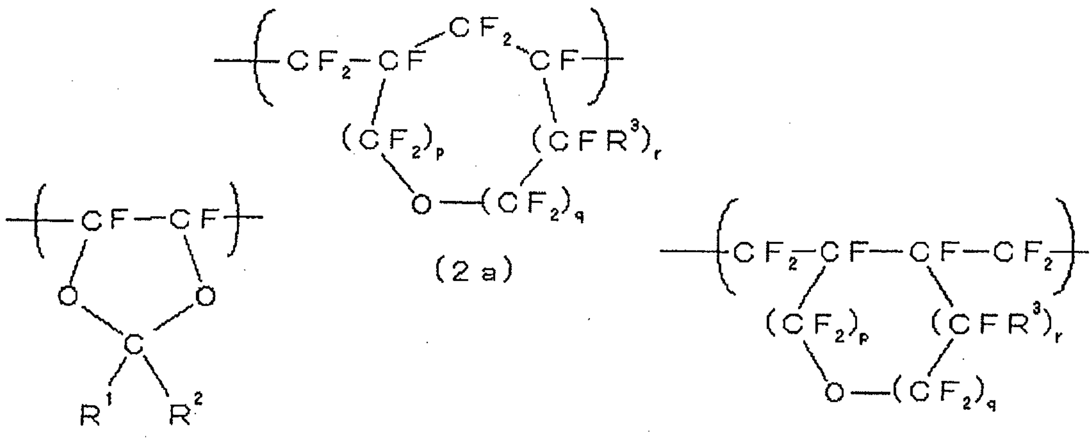

(1) (2 a) (2 b)

wherein $R^1$, $R^2$, and $R^3$ are each independently a fluorine atom or a perfluoroalkyl group; p + q + r is an integer of from 1 to 6; p is an integer of from 0 to 5; q is an integer of from 0 to 4; and r is 0 or 1.

**4.** The fluorinated elastic tube according to any of claims 1 to 3, wherein the amorphous perfluororesin membrane has a critical surface tension of not higher than 20 mN/m.

**5.** The fluorinated elastic tube according to any of claims 1 to 4, wherein the elastic hollow body made of a fluorinated polymer comprises a porous fluororesin and a fluoroelastomer filling pores of the porous fluororesin.

**6.** The fluorinated elastic tube according to claim 5, wherein the elastic hollow body made of a fluorinated polymer is a roll-shaped product having a first layer made of a fluoroelastomer and a second layer made of a porous fluororesin, of which pores are filled with a fluoroelastomer.

**7.** The fluorinated elastic tube according to claim 6, wherein the thickness ratio of the first layer to the second layer (the first layer / the second layer) is not higher than 6.5/1.

**8.** The fluorinated elastic tube according to any of claims 5 to 7, wherein the porous fluororesin is an expanded porous polytetrafluoroethylene.

**9.** The fluorinated elastic tube according to any of claims 5 to 8, wherein the porous fluororesin has a pore ratio of from 40% to 98%.

**10.** The fluorinated elastic tube according to any of clams 5 to 9, wherein the porous fluororesin has a maximum pore diameter of from 0.01 to 20 $\mu$m.

**11.** The fluorinated elastic tube according to any of claims 1 to 10, wherein the elastic hollow body has an inner diameter of from 1 to 40 mm and a thickness of from 0.5 to 25 mm.

**12.** The fluorinated elastic tube according to any of claims 1 to 11, wherein the elastic hollow body comprises a reinforcing layer and/or a low frication layer formed on the outer surface thereof.

**13.** The fluorinated elastic tube according to claim 12, wherein the reinforcing layer and/or the low frication layer is a tube-shaped product made of a fluororesin, a fluororesin coating layer, or a carbon-based coating layer.

**14.** A pinch bulb comprising the fluorinated elastic tube according to any of claims 1 to 13.

**15.** A roller pump comprising the fluorinated elastic tube according to any of claims 1 to 13.

## Patentansprüche

1. Fluoriertes elastisches Rohr umfassend: einen elastischen hohlen Körper, der aus einem fluorierten Polymer hergestellt ist; und eine amorphe Perfluorharzmembran, die eine Dicke von nicht mehr als 1 μm aufweist und sich in direktem engem Kontakt mit der Innenfläche des hohlen Körpers befindet.

2. Fluoriertes elastisches Rohr nach Anspruch 1, wobei das amorphe Perfluorharz ein Perfluorharz ist, das eine Ringstruktur in einer Hauptkette davon aufweist.

3. Fluoriertes elastisches Rohr nach Anspruch 1 oder 2, wobei das amorphe Perfluorharz eine Wiederholungseinheit der Formel (1), (2a) oder (2b) aufweist:

Chemische Formel 1

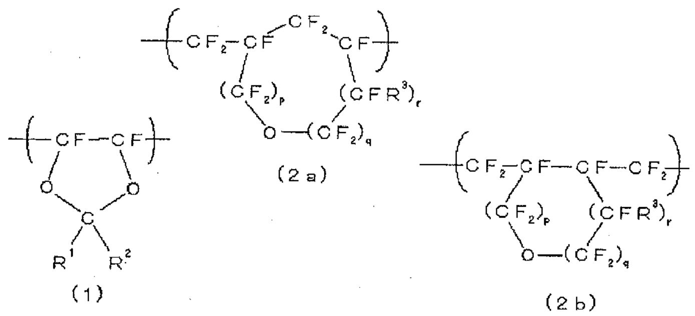

(1) (2a) (2b)

wobei $R^1$, $R^2$ und $R^3$ jeweils unabhängig ein Fluoratom oder eine Perfluoralkylgruppe sind; p + q + r eine ganze Zahl von 1 bis 6 ist; p eine ganze Zahl von 0 bis 5 ist; q eine ganze Zahl von 0 bis 4 ist; und r 0 oder 1 beträgt.

4. Fluoriertes elastisches Rohr nach einem der Ansprüche 1 bis 3, wobei die amorphe Perfluorharzmembran eine kritische Oberflächenspannung von nicht mehr als 20 mN/m aufweist.

5. Fluoriertes elastisches Rohr nach einem der Ansprüche 1 bis 4, wobei der elastische hohle Körper, der aus einem fluorierten Polymer hergestellt ist, ein poröses Fluorharz und ein Poren füllendes Fluorelastomer des porösen Fluorharzes umfasst.

6. Fluoriertes elastisches Rohr nach Anspruch 5, wobei der elastische hohle Körper, der aus einem fluorierten Polymer hergestellt ist, ein rollenförmiges Produkt ist, das eine erste Schicht, die aus einem Fluorelastomer hergestellt ist, und eine zweite Schicht, die aus einem porösen Fluorharz hergestellt ist, aufweist, dessen Poren mit einem Fluorelastomer gefüllt sind.

7. Fluoriertes elastisches Rohr nach Anspruch 6, wobei das Dickenverhältnis der ersten Schicht zur zweiten Schicht (erste Schicht/zweite Schicht) nicht mehr als 6,5/1 beträgt.

8. Fluoriertes elastisches Rohr nach einem der Ansprüche 5 bis 7, wobei das poröse Fluorharz ein expandiertes poröses Polytetrafluorethylen ist.

9. Fluoriertes elastisches Rohr nach einem der Ansprüche 5 bis 8, wobei das poröse Fluorharz ein Porenverhältnis von 40% bis 98 % aufweist.

10. Fluoriertes elastisches Rohr nach einem der Ansprüche 5 bis 9, wobei das poröse Fluorharz einen maximalen Porendurchmesser von 0,01 bis 20 μm aufweist.

11. Fluoriertes elastisches Rohr nach einem der Ansprüche 1 bis 10, wobei der elastische hohle Körper einen Innendurchmesser von 1 bis 40 mm und eine Dicke von 0,5 bis 25 mm aufweist.

12. Fluoriertes elastisches Rohr nach einem der Ansprüche 1 bis 11, wobei der elastische hohle Körper eine Verstärkungsschicht und/oder eine Schicht geringer Reibung umfasst, die auf der Außenfläche davon gebildet ist.

13. Fluoriertes elastisches Rohr nach Anspruch 12, wobei die Verstärkungsschicht und/oder die Schicht geringer Reibung ein rohrförmiges Produkt ist, das aus einem Fluorharz, einer Fluorharzbeschichtungsschicht oder einer Beschichtungsschicht auf der Basis von Kohlenstoff hergestellt ist.

14. Quetschblase umfassend das fluorierte elastische Rohr nach einem der Ansprüche 1 bis 13.

15. Walzenpumpe umfassend das fluorierte elastische Rohr nach einem der Ansprüche 1 bis 13.

## Revendications

1. Tube élastique fluoré comprenant : un corps élastique creux constitué d'un polymère fluoré ; et une membrane en résine perfluorée amorphe ayant une épaisseur non supérieure à 1 μm et se trouvant en contact direct étroit avec la surface interne du corps creux.

2. Tube élastique fluoré selon la revendication 1, dans lequel la résine perfluorée amorphe est une résine perfluorée ayant une structure cyclique dans une chaîne principale de celle-ci.

3. Tube élastique fluoré selon la revendication 1 ou 2, dans lequel la résine perfluorée amorphe a une unité de répétition de formule (1), (2a) ou (2b) :

Formule chimique

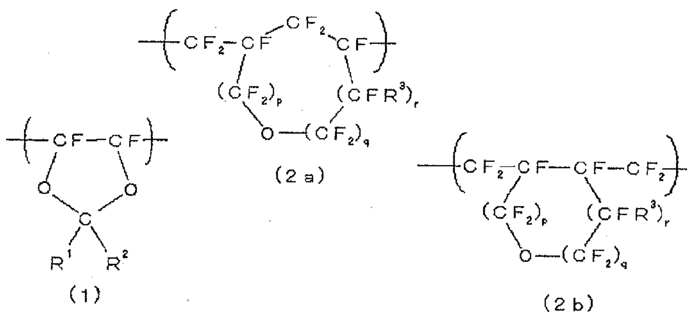

(1) (2a) (2b)

dans laquelle $R^1$, $R^2$ et $R^3$ sont chacun indépendamment un atome de fluor ou un groupe alkyle perfluoré ; p + q + r est un nombre entier d'une valeur de 1 à 6 ; p est un nombre entier d'une valeur de 0 à 5 ; q est un nombre entier d'une valeur de 0 à 4 ; et r a la valeur de 0 ou 1.

4. Tube élastique fluoré selon l'une quelconque des revendications 1 à 3, dans lequel la membrane de résine perfluorée amorphe a une tension superficielle critique non supérieure à 20 mN/m.

5. Tube élastique fluoré selon l'une quelconque des revendications 1 à 4, dans lequel le corps élastique creux constitué d'un polymère fluoré comprend une résine fluorée poreuse et un élastomère fluoré remplissant les pores de la résine fluorée poreuse.

6. Tube élastique fluoré selon la revendication 5, dans lequel le corps élastique creux constitué d'un polymère fluoré est un produit en forme de rouleau ayant une première couche constituée d'un élastomère fluoré et une seconde couche constituée d'une résine fluorée poreuse, dont les pores sont remplis d'un élastomère fluoré.

7. Tube élastique fluoré selon la revendication 6, dans lequel le rapport d'épaisseur de la première couche à la seconde couche (la première couche/la seconde couche) n'est pas supérieur à 6,5/1.

8. Tube élastique fluoré selon l'une quelconque des revendications 5 à 7, dans lequel la résine fluorée poreuse est un polytétrafluoroéthylène poreux expansé.

9. Tube élastique fluoré selon l'une quelconque des revendications 5 à 8, dans lequel la résine fluorée poreuse a un rapport de pore de 40 % à 98 %.

**10.** Tube élastique fluoré selon l'une quelconque des revendications 5 à 9, dans lequel la résine fluorée poreuse a un diamètre maximal de pores de 0,01 à 20 μm.

**11.** Tube élastique fluoré selon l'une quelconque des revendications 1 à 10, dans lequel le corps élastique creux a un diamètre interne de 1 à 40 mm et une épaisseur de 0,5 à 25 mm.

**12.** Tube élastique fluoré selon l'une quelconque des revendications 1 à 11, dans lequel le corps élastique creux comprend une couche de renfort et/ou une couche à coefficient de friction réduit formée sur la surface externe de celui-ci.

**13.** Tube élastique fluoré selon la revendication 12, dans lequel la couche de renfort et/ou la couche à coefficient de friction réduit est un produit en forme de tube constitué d'une résine fluorée, d'une couche de revêtement en résine fluorée, ou d'une couche de revêtement à base de carbone.

**14.** Poire à pincer comprenant le tube élastique fluoré selon l'une quelconque des revendications 1 à 13.

**15.** Pompe à galet comprenant le tube élastique fluoré selon l'une quelconque des revendications 1 à 13.

FIG. 1

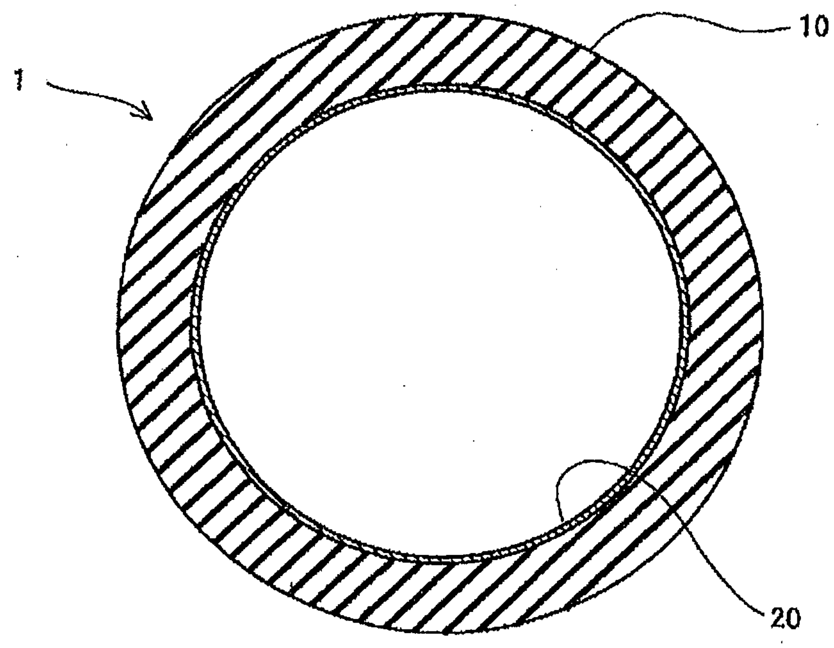


FIG. 2

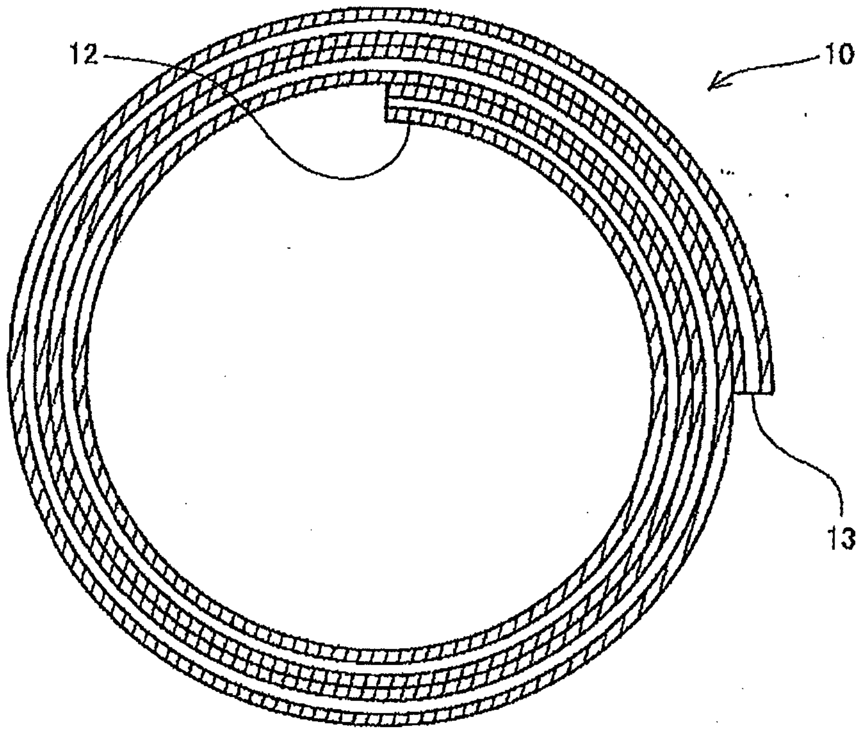

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4047185 A
- JP 59041687 A
- JP 2001193659 A
- JP 2004001467 A
- JP 2008030471 A
- JP 3252474 A
- JP 2129254 A
- JP 3252475 A
- JP 2002502735 A